# EUROPÄISCHE PATENTSCHRIFT

(11) **EP 0 519 193 B1**
(45) Veröffentlichungstag und Bekanntmachung des Hinweises auf die Patenterteilung: **25.10.1995**
(21) Anmeldenummer: 92107565.1
(22) Anmeldetag: 05.05.1992
(51) Int. Cl.: G01G 19/24

(54) **Dosierwaage**
Dosing balance
Balance de dosage

(30) Priorität: 16.06.1991 DE 4119854
(43) Veröffentlichungstag der Anmeldung: 23.12.1992
(73) Patentinhaber: MASCHINENFABRIK GUSTAV EIRICH, D-74736 Hardheim (DE)
(72) Erfinder: Diem, Winfried, W-6800 Mannheim 61 (DE)
(74) Vertreter: Weber, Dieter, Dr.

(56) Entgegenhaltungen:
- CH-A- 642 744
- GB-A- 2 131 962
- US-A- 4 733 971

## Beschreibung

Die vorliegende Erfindung betrifft eine Dosierwaage für Schüttgüter oder Flüssigkeiten. Derartige Dosierwaagen oder Behälterwaagen zum Wägen von Schüttgütern und Flüssigkeiten sind z.B. aus Gemenge-Mischanlagen bekannt. Ebenso sind auch Dosiereinrichtungen zur volumetrischen Dosierung von Schüttgütern und Flüssigkeiten bekannt. Es gibt chargenweise arbeitende Gemenge-Mischanlagen, in welchen einige der Gemischkomponenten gravimetrisch mit den vorgenannten Dosierwaagen abgewogen werden, während andere Komponenten mit Hilfe von Meßgefäßen nach Volumen abgemessen werden.

Beispiele hierfür sind z.B. Trockenmörtel-Mischanlagen. Zuschlagkörnungen, Bindemittel und Additive werden gravimetrisch, d.h. durch Wägen, dosiert, während Leichtzuschläge wie Polystyrol, Perlite und andere Materialien nach ihrem jeweiligen Volumen dosiert werden müssen, da ihre Schüttgewichte stark schwanken können, d.h. gleiche Massen von Material haben oft sehr unterschiedliche Volumina. Auch in der Industrie für feuerfeste Materialien sind Gemenge-Dosier- und Mischanlagen bekannt, bei welchen z.B. Schüttgüter gravimetrisch und Flüssigkeiten nach Volumen dosiert werden. Als nachteilig wird dabei angesehen, daß bei separater Zuordnung von Dosierwaagen und Volumen-Dosiereinrichtungen zu demselben Mischer hin häufig Platzprobleme auftreten und separate Überleitschurren zur Mischerbeschickung erforderlich sind.

Derartige Misch- bzw. Dosieranlagen sind aus der UK Patentanmeldung GB-2131962-A, dem schweizerischen Patent Nr. 642744 und dem US Patent Nr. 4,733,971 bekannt.

Demgegenüber liegt der vorliegenden Erfindung die Aufgabe zugrunde, eine Dosierwaage so auszugestalten, daß mit ihr bei kompaktem Aufbau beliebige Schüttgüter und Flüssigkeiten exakt dosierbar sind.

Diese Aufgabe wird entsprechend dem Anspruch 1 gelöst.

Anstelle eines einzigen Meßbehälters sind also zwei Meßbehälter in Kombination miteinander vorgesehen, wobei der zweite Meßbehälter unmittelbar am oder im ersten Meßbehälter angeordnet ist und so indirekt auch an den Wägeelementen gelagert ist, wobei zusätzlich für mindestens einen der Behälter eine Volumenmeßeinrichtung angeordnet ist, so daß neben der gravimetrischen Erfassung des Inhaltes dieses Meßbehälters insbesondere auch das Volumen des in ihm aufgenommenen Schüttgutes bzw. der aufgenommenen Flüssigkeit bestimmt werden kann.

Anstelle von zwei getrennten Einrichtungen, von denen eine volumetrisch und die andere gravimetrisch dosiert, ist also nunmehr eine einzige Vorrichtung mit zwei Behältern vorgesehen, deren beider Inhalt gravimetrisch bestimmt werden kann, wobei der Inhalt zumindest eines der Behälter zusätzlich auch hinsichtlich seines Volumens erfaßt wird.

Für die Anordnung der beiden Behälter gibt es eine Reihe verschiedener Möglichkeiten und Ausführungsformen, die im folgenden beschrieben werden. Zum einen kann in einem entsprechend größeren Behälter lediglich eine Trennwand vorgesehen werden, wobei für eines der so abgetrennten Volumina des Behälters die Volumenmeßeinrichtung vorgesehen ist. Es versteht sich, daß dabei der Behälter insgesamt auf bzw. an Wägeelementen gelagert ist.

Gemäß einer bevorzugten Ausführungsform der Erfindung ist einer der beiden Behälter ganz oder teilweise in dem Volumen des anderen Behälters aufgenommen, wobei besonders bevorzugt eine solche Ausführungsform ist, bei welcher beide Behälter rotationssymmetrisch ausgebildet und konzentrisch zueinander angeordnet sind, so daß also ein kleinerer (zweiter) Behälter konzentrisch im Inneren eines (ersten) Meßbehälters angeordnet ist. In axialer Richtung kann dabei der zweite Behälter den ersten Behälter ohne weiteres überragen. Zweckmäßigerweise ist an dem ersten Behälter auch ein Deckel vorgesehen, so daß die konzentrische Aufhängung des zweiten Behälters in dem ersten Behälter an dem Deckel bzw. durch eine entsprechende Deckelöffnung hindurch ohne weiteres möglich ist. Bei einem oben offenen ersten Behälter kann selbstverständlich der zweite Behälter auch über Traversen oder dergleichen an dem Rand des ersten Behälters gelagert bzw. aufgehängt werden.

Zweckmäßigerweise ist mindestens der erste Behälter an seinem unteren Ende mit einer Entleereinrichtung versehen. Auch der zweite Behälter hat selbstverständlich eine Entleeröffnung an seinem unteren Ende, die aber - je nach Anwendungszweck -nicht unbedingt verschließbar sein muß. Für eine Reihe von Anwendungsfällen ist es jedoch zweckmäßig, wenn sowohl der erste als auch der zweite Behälter an ihren unteren Enden jeweils eine Entleereinrichtung mit einem Verschlußaggregat haben, wobei sich die Entleereinrichtung des zweiten Behälters in das Volumen des ersten Behälters öffnet. Dosiervorgänge werden im folgenden nur im Zusammenhang mit den bevorzugten Ausführungsformen mit einem im Inneren des ersten Behälters gegebenenfalls konzentrisch zu diesem angeordneten zweiten Behälter beschrieben, sind jedoch ohne weiteres auch auf andere Ausführungsformen übertragbar.

Bei einer Dosierung zweier Schüttgüter kann also beispielsweise das eine Schüttgut in den äußeren (ersten) Meßbehälter eingegeben werden, wobei das sich hierdurch ändernde Gewicht beider Behälter einschließlich Inhalt über die Wägeelemente erfaßt wird. In einer automatischen Dosieranlage können beispielsweise Gewichtsgrenzwerte eingegeben werden, bei deren Erreichen die weitere Zufuhr des betreffenden Schüttgutes in den ersten Meßbehälter hinein automatisch gestoppt wird. Anschließend erfolgt eine volumetrische Dosierung durch Abfüllen eines Schüttgutes in den inneren (zweiten) Meßbehälter. Eine Volumenmeßeinrichtung erfaßt dabei den Füllstand des inneren Meßbehälters, so daß sich aus der geometrischen Form des Meßbehälters und dem Füllstand automatisch dessen Füllvolumen ergibt. Auch hier kann in einer automatischen Dosiereinrichtung bei Erreichen eines Grenzwertes des Füllstandes die weitere Zufuhr des betreffenden Schüttgutes von der Anlage selbsttätig gestoppt werden. Die beiden Behälter enthalten nun die gewünschten Mengen an zu vermischenden Schüttgütern, wobei eine Komponente nach Gewicht, die andere nach Volumen bestimmt ist. Bei Schüttgütern mit sehr unterschiedlichen Schüttgewichten, die im allgemeinen nach bestimmten Volumina dosiert werden, kann es jedoch zweckmäßig sein, zusätzlich das Gewicht zu berücksichtigen, so daß im Falle eines besonders niedrigen Schüttgewichtes eine etwas höhere Volumendosierung gewählt wird als im Falle eines höheren Schüttgewichtes. Beispielsweise kann also das Produkt aus dem Gewicht dieses Schüttgutes und dem erfaßten Schüttgutvolumen als Dosierparameter gewählt werden. Da der zweite Meßbehälter am ersten Meßbehälter angeordnet ist, welcher wiederum an den Wägeelementen aufgehängt bzw. auf diesen gelagert ist, wird auch das Gewicht des primär volumetrisch zu dosierenden Stoffes gleichzeitig miterfaßt, so daß es ohne weiteres möglich ist, den vorgenannten Parameter zur Festlegung der Menge des Schüttgutes in dem zweiten Behälter zu wählen.

Nachdem die in den, vorzugsweise unterhalb der Dosiereinrichtung angeordneten, Mischer einzugebenden Mengen auf die vorgenannte Weise bestimmt worden sind, wird zunächst das Verschlußaggregat am äußeren, ersten Meßbehälter geöffnet, so daß sich dessen Inhalt in den darunter angeordneten Mischer ergießt. Anschließend kann, bei geöffnetem Verschlußaggregat desersten Behälters, auch das Verschlußaggregat des zweiten Behälters geöffnet werden, so daß dieses durch beide Entleereinrichtungen der Behälter hindurch und in den Mischer eintritt.

Es kann jedoch auch zweckmäßig sein, beide Verschlußaggregate mehr oder weniger gleichzeitig, oder aber das innere Verschlußaggregat des zweiten Behälters zuerst zu Öffnen, so daß schon beim Entleeren der beiden Behälter in den Mischer hinein eine gewisse Vormischung stattfindet. Wird das innere Verschlußaggregat schon vor dem äußeren geöffnet, was insbesondere dann zweckmäßig sein kann, wenn eine der beiden Komponenten eine Flüssigkeit ist, so findet eine Vormischung schon im ersten Meßbehälter statt.

Gemäß einer anderen bevorzugten Ausführungsform kann jedoch der innere Behälter auch mit einer separat durch den ersten Meßbehälter hindurch- und aus diesem herausführenden Entleereinrichtung versehen sein. Auf diese Weise ist die Reihenfolge der Entleerung in den folgenden Mischer beliebig und unabhängig davon, in welchem der beiden Meßbehälter sich die zuerst in den Mischer einzugebende Komponente befindet. Dies erhöht die Flexibilität beim Einsatz der erfindungsgemäßen Dosierwaage. Die gleichzeitige Erfassung sowohl des Volumens als auch des Gewichtes des Schüttgutes oder der Flüssigkeit in zumindest einem der beiden Behälter, ermöglicht in vorteilhafter Weise die Ermittlung des Schüttgewichtes, wie bereits erwähnt, und es können beispielsweise Lieferscheine oder Rechnungen auch auf das Gewicht des ansonsten volumetrisch dosierten Stoffes bezogen werden.

Besonders zweckmäßig ist eine Ausführungsform der Erfindung, bei welcher die Volumen- bzw. Füllstandsmeßeinrichtung zwischen einer wirksamen und einer nicht wirksamen Position verfahrbar ist. Füllstandsmeßeinrichtungen sind an sich bekannt. Im Falle der Bestimmung von Flüssigkeitspegeln lassen sich in einfacher Weise Schwimmer als Meßgeber verwenden, man kann jedoch auch optische oder auch auf anderen physikalischen Prinzipien beruhende Füllstandsmesser verwenden. Da jedoch nicht in allen Fällen eine volumetrische Dosierung erfolgen muß, die Füllstandsmeßeinrichtung außerdem gegenüber mechanischen oder chemischen Einflüssen empfindlich sein kann und auch eine Verfälschung des Wägeergebnisses durch die Füllstandsmeßeinrichtung nicht auszuschließen ist, wenn diese nicht insgesamt auch an den Behältern montiert ist, so daß ihr Gewicht immer mitgewogen wird, kann die erwähnte verfahrbare Füllstandsmeßeinrichtung auch aus dem betreffenden Behälter herausgezogen werden, zumindest soweit, daß sie nicht mehr in das Schüttgut oder die Flüssigkeit in dem Behälter eintaucht.

Nur wenn der Füllstand bestimmt werden soll, wird diese Füllstandsmeßeinrichtung in den Behälter eingefahren. Dabei sorgen beispielsweise Anschläge dafür, daß immer eine exakt reproduzierbare Meßposition eingenommen wird.

Weitere Vorteile, Merkmale und Anwendungsmöglichkeiten der vorliegenden Erfindung werden deutlich anhand der folgenden Beschreibung bevorsugter Ausführungsformen und der dazugehörigen Figuren. Es zeigen:
- Figur 1 bis 6: Schnittansichten verschiedener Ausführungsformen der Erfindung mit teilweise konzentrisch zueinander angeordneten Meßbehältern 1, 3,
- Figur 7: einen Schnitt durch die in den Figuren 3 und 4 dargestellten Ausführungsformen entlang der Linie A-A (in Figur 3) bzw. B-B (in Figur 4).

In allen Figuren sind die wesentlichen Elemente der erfindungsgemäßen Dosierwaage lediglich schematisch dargestellt. Hinsichtlich der genauen Form und Ausgestaltung sind selbstverständlich viele Variationen denkbar, die dem Fachmann jedoch geläufig sind.

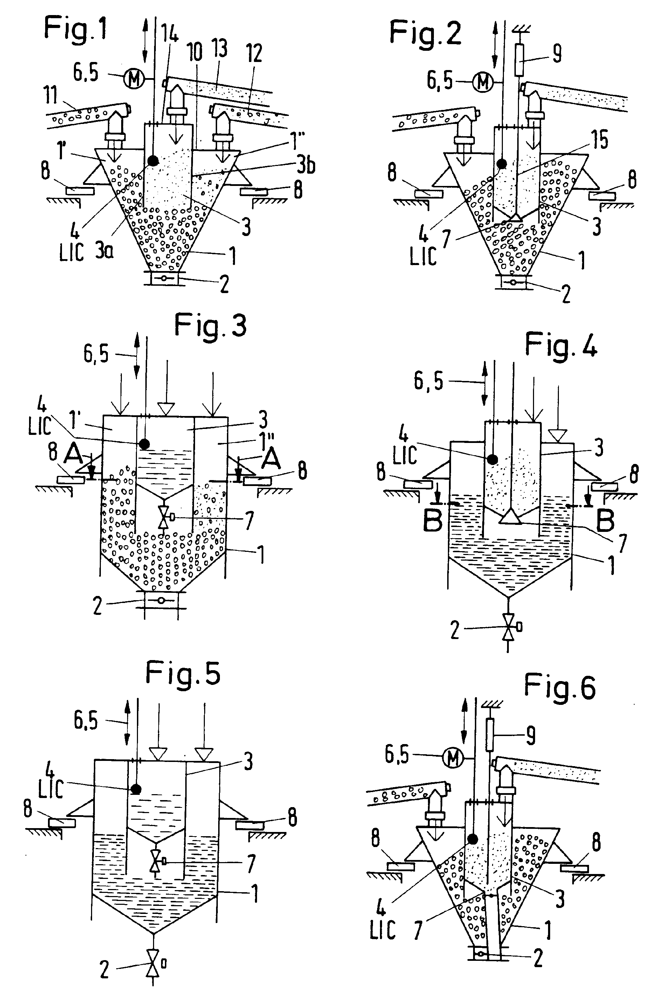

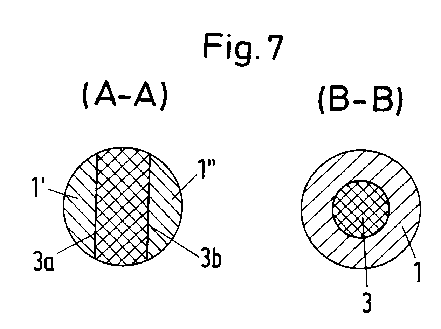

In Figur 1 erkennt man einen ersten, nach unten konisch zulaufenden Meßbehälter 1 mit einer Entleereinrichtung 2 am unteren Ende, die ein Verschlußaggregat aufweist. In dem Behälter 1 ist ein weiterer Meßbehälter 3 angeordnet, der in vertikaler Richtung überden Deckel 10 des ersten Meßbehälters 1 hinaus- bzw. durch diesen hindurchragt und der sich nach unten bis etwa zur halben Höhe des ersten Meßbehälters 1 in diesen hinein erstreckt. Der innere Meßbehälter 3 kann dabei beispielsweise zylinderförmig ausgebildet und im wesentlichen konzentrisch zum konischen Behälter 1 angeordnet sein, seine Seitenwände 3a, 3b können jedoch auch zwei ebene, parallele Platten sein, welche sich zwischen den gegenüberliegenden konischen Wänden des Behälters 1 erstrecken, wie dies beispielsweise im Schnitt A-A in Figur 7 dargestellt ist. Auf diese Weise wird die gesamte Anordnung effektiv in drei Kammern eingeteilt, nämlich die zentrale innere, vom Behälter 3 gebildete Kammer und zwei rechts und links neben dem inneren Behälter 3 gelegene Kammern 1′, 1˝ des äußeren Behälters 1, wobei jedoch die beiden äußeren Kammern unterhalb des Behälters 3 miteinander verbunden sind und auch der Behälter 3 nach unten hin offen ist und so ebenfalls eine Verbindung zu den beiden äußeren Kammern hat. Zufuhreinrichtungen 11 bis 13, z.B. Förderschnecken oder dergleichen, sind am oberen Ende der Behälter 1, 3 angeordnet. Die Behälter 1, 3 weisen Deckel 10, 14 auf, die entsprechende Einfüllöffnungen haben. Dabei sind jedoch die Zufuhreinrichtungen 11 bis 13 nicht in mechanischem Kontakt mit den Deckeln 10, 14, um nicht durch ihr Eigengewicht und durch das Gewicht der in ihnen enthaltenen Schüttgüter die Wägeergebnisse zu verfälschen. Die Schüttgüter oder Flüssigkeiten treten also im wesentlichen im freien Fall aus den Fördereinrichtungen 11 bis 13 aus und durch die entsprechenden Öffnungen in den Deckeln 10, 14 in die Behälter 1, 3 ein. Im Beispiel der Figur 1 ist die Abfüllung drei verschiedener Schüttgüter schematisch dargestellt. Zunächst wird in die links zu erkennende Kammer 1′ des Behälters 1 über die Zufuhreinrichtung 11 ein Schüttgut eingegeben, welches den Behälter 1 bis zum unteren Rand des Behälters 3 auffüllt, und schließlich auch noch einen Teil der links dargestellten Kammer 1′ des Behälters 1 füllt. Aufgrund der internen Reibung in Schüttgütern steigt dieses Schüttgut in den Behälter 3 und auch in der rechten Kammer 1˝ des Behälters 1 nicht in nennenswertem Maße hoch. Die Gewichtsänderung der gesamten Anordnung und damit das Gewicht des zugegebenen Schüttgutes wird über die Wägeelemente 8 erfaßt, auf denen der Behälter 1 mit Hilfe entsprechender Ausleger gelagert ist, und die auch das Gewicht des Behälters 3 einschließlich des Inhalts desselben gleichzeitig miterfassen, da dieser fest am Deckel 10 des Behälters 1 angebracht ist.

Anschließend wird über die Zufuhreinrichtung 12 ein weiteres Schüttgut in die rechte Kammer 1˝ des Behälters 1 eingegeben, wobei dessen Masse ebenfalls mit Hilfe der Wägeelemente 8 bestimmt wird, die eine entsprechende Gewichtsänderung erfassen. Schließlich wird noch in den zentralen Behälter 3 über eine Zufuhreinrichtung 13 ein weiteres Schüttgut eingegeben, dessen Menge nach Volumen durch die zuvor positionierte Füllstandsmeßeinrichtung bestimmt ist und dessen Masse gleichzeitig über die Wägeelemente 8 automatisch erfaßt wird, wobei gleichzeitig eine Schüttgewichts- oder Dichte-Kontrolle möglich ist. Mit 5 ist in den Figuren 1 bis 6 schematisch eine Heb- und Senkeinrichtung bezeichnet, die es ermöglicht, die Füllstandsmeßeinrichtung 4 aus dem Behälter 3 herauszuziehen oder in diesen abzusenken, d.h. zu positionieren. Gegebenenfalls kann es auch ausreichen, die Füllstandsmeßeinrichtung 4 lediglich über das Niveau des in den Behälter 3 eingegebenen Schüttgutes hinaus anzuheben. Mit 6 ist in den Figuren 1 bis 6 ein analoger oder digitaler Stellungsmelder schematisch bezeichnet, der ein Steuersignal an eine automatische Steuereinrichtung abgeben kann, die gegebenenfalls die weitere Zufuhr von Material über die Zuführeinrichtung 13 stoppt. In analoger Weise sind selbstverständlich auch die Wägeelemente 8 mit entsprechenden, nicht dargestellten Signalgebern versehen, deren Ausgangssignale ebenfalls in der Steuereinrichtung verarbeitet werden können, welche die Zufuhr von Material durch die Zuführeinrichtungen 11, 12 steuert und insbesondere bei Erreichen vorgegebener Grenzwerte stoppt.

In Figur 2 ist eine andere Ausführungsform dargestellt, bei welcher der innere Meßbehälter 3 zylindrisch ausgebildet ist. Bei Zufuhr des Schüttgutes in den Außenbehälter 1 verteilt dieses sich dann um den Behälter 3 herum. Ein Aufsteigen des in den Außenbehälter 1 eingegebenen Schüttgutes in den Behälter 3 findet auch bei dieser Ausführungsform nicht statt, zusätzlich ist jedoch der Behälter 3 an seinem unteren Ende mit einer Entleereinrichtung 7 versehen, welche ein geeignetes Verschlußaggregat aufweist, das von außen betätigbar ist. Die Betätigung des Verschlußaggregates kann beispielsweise über eine Welle erfolgen, die durch den ersten Behälter und dessen Außenwand hindurchgeführt ist oder aber durch eine Stange 15, die von einer oberhalb des Behälters 3 angeordneten Betätigungseinrichtung 9 entlang des Zentrums des Behälters 3 nach unten verläuft.

In den Figuren 3 bis 5 sind die Zufuhreinrichtungen 11 bis 13 nur noch schematisch durch Pfeile angedeutet, wobei einfache Pfeile die Zufuhr von Schüttgütern andeuten, während Pfeile mit einem geschlossenen Dreieck als Spitze die Zufuhr von Flüssigkeit andeuten. Ansonsten unterscheiden sich die Ausführungsformen der Figuren 3 bis 5 lediglich dadurch von den übrigen Ausführungsformen, daß der Außenbehälter 1 überwiegend zylindrisch und lediglich an seinem unteren Ende konisch ausgebildet ist, damit ein leichterer Ablauf von Schüttgütern aus der Entleereinrichtung 2 erfolgen kann. In der Ausführungsform nach Figur 3 ist außerdem der Behälter 3 vollständig in dem Behälter 1 aufgenommen. Dies gilt auch für die Ausführungsform nach Figur 5, während in Figur 4 der Innenbehälter 3, ähnlich wie im Falle der in den Figuren 1, 2 und 6 dargestellten Ausführungsformen, durch den Deckel 10 des Außenbehälters 1 hindurchragt. Die Einzelheiten der Füllstandsmeßeinrichtung, insbesondere auch die Heb- und Senkvorrichtung sowie Signalgeber und dergleichen, sind bei allen Ausführungsformen im wesentlichen die gleichen.

In Figur 3 ist eine Ausführungsform dargestellt, bei welcher der Außenbehälter 1 durch zwei parallele, quer durch den Behälter 1 verlaufende Wände in drei Kammern aufgeteilt ist, wobei die rechte und die linke Kammer über den unteren Teil des Behälters 1 miteinander in Verbindung stehen, der zentrale Behälter 3 jedoch über ein Verschlußaggregat einer Entleereinrichtung 7 von dem Volumen des Behälters 1 abgetrennt ist.

Auch hier können, ähnlich wie im Zusammenhang mit Figur 1 beschrieben, zunächst zwei unterschiedliche Schüttgüter nacheinander entsprechend ihrem Gewicht in die linke bzw. rechte Kammer des Behälters 1 eingegeben werden, anschließend wird z. B. eine Flüssigkeit in die zentrale Kammer 3 eingegeben, deren Menge nach ihrem Volumen dosiert wird. Hierzu weist die Füllstandsmeßeinrichtung 4 geeignete Sonden, z.B. optische oder kapazitive Sonden, auf.

Das Überführen der so abgemessenen Mengen in einen anschließenden Mischer, der vorzugsweise unterhalb der Entleereinrichtung 2 angeordnet ist, kann nun entweder in der Weise erfolgen, daß die Entleereinrichtung 2 zuerst geöffnet wird, so daß die Schüttgüter zunächst für sich in den Mischer gelangen, woraufhin über die Entleereinrichtung 7 auch die im Behälter 3 enthaltene Flüssigkeit zugegeben wird. Es kann jedoch das Verschlußaggregat der Entleereinrichtung 7 schon vor dem Verschlußaggregat der Entleereinrichtung 2 oder gleichzeitig mit diesem geöffnet werden, so daß sich die Flüssigkeit schon im Behälter 1 und während des Ablaufens in den Mischer mit dem Schüttgut aus dem Behälter 1 vermischt.

In Figur 4 ist eine Ausführungsform dargestellt, deren Aufbau demjenigen in Figur 2 sehr ähnlich ist mit der einzigen Ausnahme, daß der Außenbehälter 1 nicht durchgehend konisch, sondern zylindrisch mit einem konischen Unterteil ist.

Außerdem ist in Figur 4 dargestellt, daß eine Flüssigkeit auch in den Außenbehälter 1 eingegeben werden und ihre Menge nach Gewicht festgelegt werden kann, während in den zylindrischen Innenbehälter 3 ein Schüttgut eingegeben wird, dessen Menge volumetrisch bestimmt wird, wiederum mit Hilfe einer Füllstandsmeßeinrichtung 4. Auch in diesem Fall ist die Reihenfolge des Öffnens der Verschlußaggregate der Entleereinrichtungen 2 bzw. 7 frei wählbar.

In Figur 5 ist schließlich eine Ausführungsform dargestellt, bei welcher sowohl in den Außenbehälter 1, wie auch in den Innenbehälter 3 jeweils eine Flüssigkeit eingegeben werden kann. Die Menge einer der beiden Flüssigkeiten wird über ihr Gewicht, die Menge der anderen über ihr Volumen bestimmt.

Es versteht sich, daß bei allen beschriebenen Ausführungsformen die Volumen- bzw. Füllstandsmeßeinrichtung ebenso auch in dem Behälter 1 angeordnet sein könnte, so daß die in den Außenbehälter 1 eingegebenen Schüttgüter oder Flüssigkeiten volumetrisch bestimmt werden, während die in den Innenbehälter 3 eingegebenen Schüttgüter oder Flüssigkeiten hinsichtlich ihres Gewichtes bestimmt bzw. dosiert werden. Ebenso ist es auch möglich, in beiden Behältern 1,3 jeweils eine Volumen- oder Füllstandsmeßeinrichtung 4 anzuordnen oder aber die Heb- und Senkeinrichtung 5 so auszugestalten, daß sie wahlweise in einen der beiden Behälter 1 oder 3 abgesenkt werden kann. Das Gewicht der eingegebenen Schüttgüter oder Flüssigkeiten wird auf jeden Fall bei der Zugabe in beide Behälter erfaßt, unabhängig davon, ob auch eine Füllstands- bzw. Volumenmessung stattfindet.

Figur 6 zeigt schließlich eine Ausführungsform der Erfindung, die in fast allen wesentlichen Einzelheiten mit der Ausführungsform gemäß Figur 2 übereinstimmt, wobei jedoch im Unterschied zu der Ausführungsform nach Figur 2 die Entleereinrichtung 7 des Innenbehälters 3 so ausgestaltet ist, daß sie eine separat nach außen geführte Entleeröffnung hat. Auf diese Weise ist es möglich, auch das in den Innenbehälter 3 eingegebene Schüttgut oder die dort eingegebene Flüssigkeit unabhängig von dem Material im Außenbehälter 1 zuerst in einen darunterliegenden Mischer zu überführen. Selbstverständlich ist auch eine gleichzeitige Zugabe in den Mischer durch Öffnen beider Entleerungseinrichtungen 2, 7 oder auch die Umkehrung der Reihenfolge möglich.

Die erfindungsgemäße Dosierwaage bringt eine erhebliche Platzeinsparung und Vereinfachung des Dosiervorganges mit sich, sofern sowohl volumetrische als auch gravimetrische Dosierungen erforderlich sind. Dabei ermöglichen die verschiedenen Ausführungsformen eine außerordentlich flexible Anpassung an die jeweiligen Gegebenheiten, insbesondere hinsichtlich einer etwaigen Vormischung oder hinsichtlich der Reihenfolge der Zugabe der abgemessenen Mengen in einen Mischer.

Die Steuerung der Dosierwaage kann durch die unabhängige Erfassung der beiden Parameter Gewicht und Volumen oder beliebigen Kombinationen hiervon mit Mitteln, die dem Fachmann geläufig sind, in einfacher Weise erfolgen.

## Patentansprüche

1. Dosierwaage für Schüttgüter oder Flüssigkeiten, wobei ein ersten Meßbehälter (1) an Wägeelementen (8) gelagert ist und an dem oder in dem ersten Meßbehälter (1) ein zweiter Meßbehälter (3) angeordnet ist und wobei für mindestens einen der beiden Meßbehälter (1, 3) eine Volumenmeßeinrichtung (4) zur Bestimmung des Volumens des in dem Behälter (1, 3) enthaltenen Materials vorgesehen ist.

2. Dosierwaage nach Anspruch 1, wobei der zweite Meßbehälter (3) durch Abtrennen eines Teils des ersten Meßbehälters (1) mittels mindestens einer Trennwand (3a, 3b) gebildet ist.

3. Dosierwaage nach Anspruch 1 oder 2, wobei der zweite Meßbehälter (3) ein separater, mindestens teilweise innerhalb des Volumens des ersten Meßbehälters (1) angeordneter Behälter ist.

4. Dosierwaage nach einem der Ansprüche 1 bis 3, wobei der erste Meßbehälter einen Deckel (10) aufweist.

5. Dosierwaage nach einem der Ansprüche 1 bis 4, wobei der zweite Meßbehälter (3) am oberen Rand, am Deckel (10) des ersten Meßbehälters (1) oder mittels Traversen im bzw. am ersten Meßbehälter (1) aufgehängt ist.

6. Dosierwaage nach einem der Ansprüche 1 bis 5, wobei der erste und der zweite Meßbehälter (1, 3) rotationssymmetrisch ausgebildet und konzentrisch zueinander angeordnet sind.

7. Dosierwaage nach einem der Ansprüche 1 bis 6, wobei eine Entleereinrichtung (2) am unteren Ende des ersten Meßbehälters (1) angeordnet ist.

8. Dosierwaage nach einem der Ansprüche 1 bis 7, wobei eine Entleereinrichtung (7) am unteren Ende des zweiten Meßbehälters angeordnet ist.

9. Dosierwaage nach Anspruch 8, wobei die Entleereinrichtung (2) des zweiten Behälters (3) in das Volumen des ersten Meßbehälters (1) mündet.

10. Dosierwaage nach Anspruch 8, wobei die Entleereinrichtung (2) des zweiten Meßbehälters (3) einen aus dem ersten Meßbehälter (1) separat herausgeführten Auslauf aufweist.

11. Dosierwaage nach einem der Ansprüche 1 bis 10, wobei die Volumenmeßeinrichtung (4) einen Füllstandsmelder (z.B. Schwimmer, kapazitive oder optische Sonde) aufweist.

12. Dosierwaage nach einem der Ansprüche 1 bis 11, wobei die Volumenmeßeinrichtung (4) zwischen einer wirksamen und einer nicht wirksamen Position verfahrbar ist.

## Claims

1. A metering weighing machine for loose materials or liquids, wherein a first measuring container (1) is mounted on weighing elements (8) and a second measuring container (3) is arranged on or in the first measuring container (1) and wherein provided for at least one of the two measuring containers (1, 3) is a volume measuring device (4) for determining the volume of the material contained in the container (1, 3).

2. A metering weighing machine according to claim 1 wherein the second measuring container (3) is formed by separating off a part of the first measuring container (1) by means of at least one partition (3a, 3b).

3. A metering weighing machine according to claim 1 or claim 2 wherein the second measuring container (3) is a separate container which is arranged at least partially within the volume of the first measuring container (1).

4. A metering weighing machine according to one of claims 1 to 3 wherein the first measuring container has a cover (10).

5. A metering weighing machine according to one of claims 1 to 4 wherein the second measuring container (3) is suspended at the upper edge, at the cover (10) of the first measuring container (1) or by means of transverse portions in or on the first measuring container (1).

6. A metering weighing machine according to one of claims 1 to 5 wherein the first and second measuring containers (1, 3) are of a rotationally symmetrical configuration and are arranged concentrically relative to each other.

7. A metering weighing machine according to one of claims 1 to 6 wherein an emptying device (2) is arranged at the lower end of the first measuring container (1).

8. A metering weighing machine according to one of claims 1 to 7 wherein an emptying device (7) is arranged at the lower end of the second measuring container.

9. A metering weighing machine according to claim 8 wherein the emptying device (2) of the second container (3) opens into the volume of the first measuring container (1).

10. A metering weighing machine according to claim 8 wherein the emptying device (2) of the second measuring container (3) has an outlet which is passed separately out of the first measuring container (1).

11. A metering weighing machine according to one of claims 1 to 10 wherein the volume measuring device (4) has a filling level signalling means (for example float, capacitive or optical probe).

12. A metering weighing machine according to one of claims 1 to 11 wherein the volume measuring device (4) is movable between an operative and an inoperative position.

## Revendications

1. Balance doseuse, pour produits en vrac ou liquides, dans laquelle un premier récipient de mesure (1) est logé contre des éléments de pesage (8), et un deuxième récipient de mesure (3) est disposé contre ou dans le premier récipient de mesure (1), et dans lequel on prévoit, pour au moins l'un des deux récipients de mesure (1, 3) un dispositif de mesure du volume (4), destiné à déterminer le volume de la matière contenue dans le récipient (1, 3).

2. Balance doseuse selon la revendication 1, dans laquelle le deuxième récipient de mesure (3) est formé par séparation d'une partie du premier récipient de mesure (1), à l'aide d'au moins une cloison de séparation (3a, 3b).

3. Balance doseuse selon la revendication 1 ou 2, dans laquelle le deuxième récipient de mesure (3) est un récipient distinct, formé au moins partiellement à l'intérieur du volume du premier récipient de mesure (1).

4. Balance doseuse selon l'une des revendications 1 à 3, dans laquelle le premier récipient de mesure comporte un couvercle (10).

5. Balance doseuse selon l'une des revendications 1 à 4, dans laquelle le deuxième récipient de mesure (3) est suspendu au bord supérieur, au couvercle (10) du premier récipient de mesure (1), ou encore, à l'aide de traverses, dans ou contre le premier récipient de mesure (1).

6. Balance doseuse selon l'une des revendications 1 à 5, dans laquelle le premier et le deuxième récipients de mesure (1, 3) ont une configuration à symétrie de rotation et sont disposés concentriquement l'une par rapport à l'autre.

7. Balance doseuse selon l'une des revendications 1 à 6, dans laquelle un dispositif de vidange (2) est disposé à l'extrémité inférieure du premier récipient de mesure (1).

8. Balance doseuse selon l'une des revendications 1 à 7, dans laquelle un dispositif de vidange (7) est disposé à l'extrémité inférieure du deuxième récipient de mesure.

9. Balance doseuse selon la revendication 8, dans laquelle le dispositif de vidange (2) du deuxième récipient (3) débouche dans le volume du premier récipient de mesure (1).

10. Balance doseuse selon la revendication 8, dans laquelle le dispositif de vidange (2) du deuxième récipient de mesure (3) comporte un orifice de décharge du premier récipient de mesure (1), réalisé séparément.

11. Balance doseuse selon l'une des revendications 1 à 10, dans laquelle le dispositif de mesure du volume (4) comporte un indicateur de volume (par exemple un flotteur, une sonde capacitive ou optique).

12. Balance doseuse selon l'une des revendications 1 à 11, dans laquelle le dispositif de mesure du volume peut se déplacer entre une position active et une position non active.
